# EUROPÄISCHE PATENTSCHRIFT

(11) **EP 0 817 347 B1**
(45) Veröffentlichungstag und Bekanntmachung des Hinweises auf die Patenterteilung: **22.08.2001**
(21) Anmeldenummer: 97810376.0
(22) Anmeldetag: 13.06.1997
(51) Int. Cl.: H02H 7/08

(54) **Verfahren zur Überwachung eines Drehstrommotors sowie dazugehörige Einrichtung**
Rotary current motor monitoring and corresponding apparatus
Procédé de surveillance d'un moteur à courant alternatif ainsi que le dispositif correspondant

(30) Priorität: 24.06.1996 CH 156596
(43) Veröffentlichungstag der Anmeldung: 07.01.1998
(73) Patentinhaber: ELCOMP AG, 8610 Uster (CH)
(72) Erfinder: Theodor, Pauli, 8121 Benglen (CH)
(74) Vertreter: Luchs, Willi

(56) Entgegenhaltungen:
- GB-A- 2 162 391
- US-A- 4 084 406
- US-A- 5 170 310

## Beschreibung

Die Erfindung bezieht sich auf ein Verfahren zur Überwachung eines Drehstrommotors, der insbesondere bei Aufzügen eingesetzt wird, bei dem mindestens ein Schütz für das Ein- und Ausschalten des Motors und ein elektronischer Motorstarter mit mindestens einem statischen Schaltelement, wie einem Halbleiter oder dergleichen, für ein Sanftanlaufen des Motors verwendet wird.

Insbesondere im Anwendungsgebiet von Seil- und Hydraulikaufzügen sind Sanft-Anlaufgeräte für die dazu verwendeten Drehstrommotoren als Antriebsorgane bekannt, wobei mittels diesen Sanft-Anlaufgeräten bezweckt wird, die Drehstrommotoren sanft anlaufen zu lassen und die im Netz erzeugten Stromspitzen weitgehend zu eliminieren. Unabhängig von der Beschaltungsweise werden alle diese "Motorstarter" durch Leistungshalbleiter, wie Thyristoren, IGBT, Dioden etc., gesteuert.

Solche elektronischen Motorstarter oder Sanftanlasser konnten bis anhin jedoch nicht als Bestandteil eines dynamischen Sicherheitskonzeptes gemäss den geltenden Normen eingesetzt werden. Der Sanftanlasser ist zwar eine Steuereinrichtung, die den Energiefluss in den statischen Elementen (z.B. Halbleitern) unterbrechen kann. Es fehlte aber immer an einer Ueberwachungseinrichtung, die prüft, ob der Energiefluss bei jedem Anhalten beispielsweise eines Liftes unterbrochen wurde.

Aus diesem Grunde wird beispielsweise bei Aufzügen der Energiefluss zum Motor durch zwei unabhängig voneinander betätigbare Schütze unterbrochen. Wenn eines der Hauptschaltglieder der beiden Schütze beim Stillsetzen des Aufzuges nicht öffnet, muss spätestens beim nächsten Richtungswechsel ein erneutes Anfahren des Aufzuges verhindert werden.

Im Bereich von Frequenz-Umrichtern wurden einige wenige Lösungen bekannt, die eine Stromüberwachung aller drei Phasen als Überwachungseinrichtung vorsahen. Dieser Lösungsansatz wurde nicht für elektronische Sanftanlasser eingesetzt und er ist auch zu aufwendig und oft teurer als die finanziellen Einsparungsmöglichkeiten, die sich durch die zusätzliche Ueberwachung ergeben.

Bei einem bekannten gattungsmässigen Verfahren nach der US-A-4,084,406 wird für ein Sanftanlaufen des Motors der Strom beim Starten mittels Halbleitern gesteuert. Während des Anlaufens bzw. auch während des Laufens des Motors mit der Nenndrehzahl ist durch einen zusätzlichen Überlastungsschutz sichergestellt, dass der Motor nicht übermässig belastet wird. Hierzu sind jeweils entsprechende Regler-Schaltkreise vorgesehen, die bei Abweichung des Ist-stromes mit dem Sollverlauf mit einem entsprechenden Befehl reagieren.

Bei einem weiteren Verfahren eines Unterbrechungssystems gemäss der Druckschrift US-A-5,170,310 ist eine Schutzschaltung beschrieben, welche insbesondere dazu dient, Ströme oder Spannungen bei Netzwerken (Power Network) zu überwachen und bei einer gewissen Abweichung eine Unterbrechung vorzunehmen. Wenn trotz einer Ansteuerung eines Unterbrechers (branch brakers) nach wie vor eine Out-put-Spannung existiert, erfolgt ein Signal an den Haupt-Unterbrecher (main braker) zum Öffnen und damit zur Unterbrechung des Hauptstromes. Mit dieser quasi doppelt gesicherten Unterbrechung erfolgt aber nicht in dem Zustand des Netzwerkes, bei dem dieses abgeschaltet ist, eine Überwachung, sondern während dem im Netzwerk effektiv ein Strom fliesst.

Der vorliegenden Erfindung wurde daher die Aufgabe zugrundegelegt, ein Verfahren zur Überwachung eines Drehstrommotores zu schaffen, mittels dem eine einfache, kostengünstige und zuverlässig arbeitende Überwachung des Drehstrommotors erfolgt.

Die Erfindung, mit der diese Aufgabe gelöst wird, ist dadurch gekennzeichnet, dass die anliegende Spannung beim Motor bei Stillstand überwacht und die Freigabe eines Motorstartes verhindert wird, wenn bei diesem Motorstillstand eine unerwünschte Spannung auf mindestens einer der angeschlossenen Phasen anliegt, wobei dem jeweiligen Schütz ein Fühler und dem jeweiligen Schaltelement ein weiterer Fühler zugeordnet ist, mittels denen ein Defekt beim jeweiligen Schütz bzw. Schaltelement festgestellt werden kann. Die finanziellen Einsparungsmöglichkeiten mit diesem Verfahren nach der Erfindung als Teil eines dynamischen Sicherheitskonzeptes liegen darin, dass auf einen der beiden Schütze verzichtet werden kann. Dadurch wird die Verkabelungsarbeit, der Materialeinsatz und der Aufwand für die gesamte Steuerung wesentlich reduziert. Zu beachten ist auch, dass sich die Wartungskosten und mögliche Betriebsausfälle durch den Wegfall des Schützes vermindern lassen, weil dieser insbesondere wegen des Kontaktabbrandes eine beschränkte Lebensdauer hat.

Ein Ausführungsbeispiel sowie weitere Vorteile der Erfindung sind anhand der Zeichnung näher erläutert. Es zeigt:
- Fig. 1: ein Blockschema des erfindungsgemässen Verfahrens und
- Fig.2: eine schematische Darstellung eines Motorstarters der Überwachungseinrichtung.

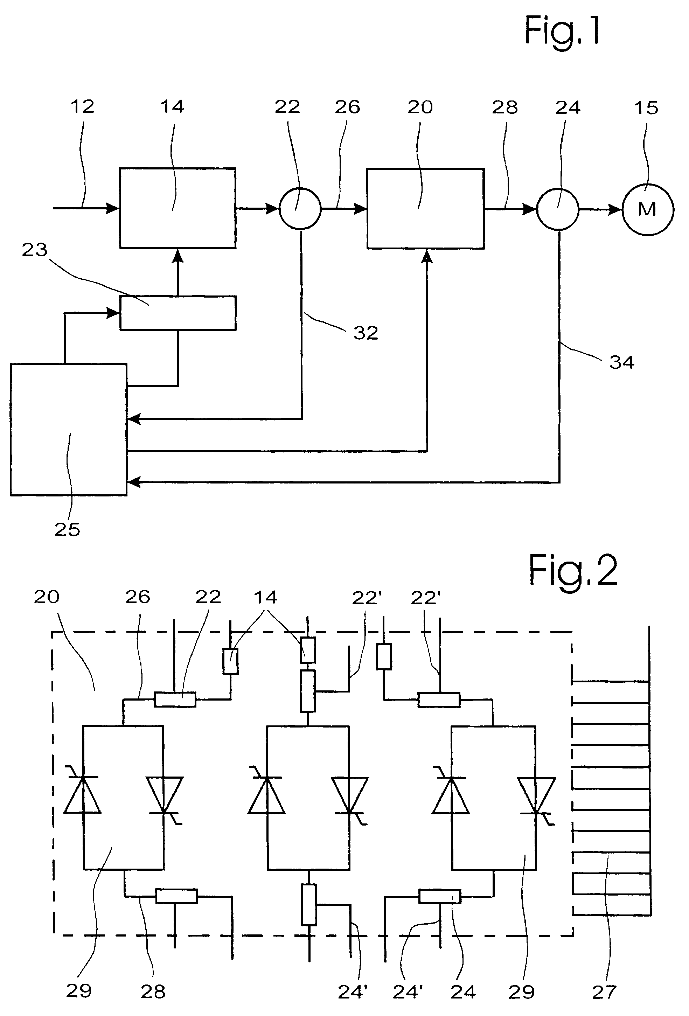

Fig.1 zeigt eine Stromversorgung, von der eine Phase 12, ein Schütz 14, eine Sanftanlaufeinrichtung oder ein elektronischer Motorstarter 20. eine Steuerung 25 sowie ein Drehstrommotor 15 angedeutet sind. Der Drehstrommotor 15 wird dabei im Rahmen der Erfindung insbesondere als Antrieb für Seil- oder Hydraulikaufzüge eingesetzt. Der elektronische Motorstarter 20 ist mit nachfolgend erläuterten statischen Elementen versehen, mittels denen ein Sanftanlaufen des Motors 15 auf an sich bekannte Art und Weise ermöglicht wird.

Erfindungsgemäss wird die anliegende Spannung zwischen dem Eingang 26 und dem Ausgang 28 des jeweiligen statischen Elementes des Motorstarters 20 überwacht und die Freigabe des Motorstarters 20 verhindert, wenn bei Motorstillstand eine Spannung auf mindestens einer der angeschlossenen Phasen anliegt.

Es ist zu diesem Zwecke eine Überwachungseinrichtung vorgesehen, die Fühler 22, 24 aufweist, welche am Ein- 26 bzw. am Ausgang 28 des jeweiligen statischen Elementes des Motorstarters 20 angeordnet sind und mittels denen das Vorhandensein einer Spannung an einer jeweiligen Phase feststellbar ist. Der Überwachungseinrichtung ist dabei wenigstens ein von der Steuerung 25 betätigbares Schaltelement, vorzugsweise ein Relais 23, zugeordnet, mittels welchem bei Vorliegen einer Spannung an wenigstens einer Phase und bei vorausgesetztem Motorstillstand ein Neustart des Motors verhindert wird. Dieses Relais 23 kann daher derart angeordnet sein, dass es im Störungsfall ein Einschalten des Schützes 14 verhindert. Wenn bei einem betriebsmässigen Halt die Unterbrechung des Energieflusses durch die statischen Elemente nicht wirksam wird, muss die Ueberwachungseinrichtung das Schütz abfallen lassen und ein erneutes Anfahren des Aufzuges verhindern.

Die Steuerung 25 ist derart ausgestaltet, dass sie bei betriebsmässig ausgeschaltetem Motor 15 nach Feststellung durch die Fühler 22, 24, ob eine Spannung an einer der Phasen 12, vorhanden ist oder nicht, das Relais gegebenenfalls ansteuert. Wenn ein Neustart aufgrund einer anliegenden Spannung nicht erfolgen kann, ist davon auszugehen, dass das Schütz 14 oder ein statisches Element ausgetauscht werden muss. In dem Zusammenhang ist im Rahmen der Erfindung überdies vorgesehen, dass der Fühler 22 am Eingang 26 einen Defekt des Schützes 14, derweil der Fühler 24 am Ausgang 28 einen Defekt des Schaltelementes, bspw. des Halbleiters, ortet. Nach einem allenfalls ausgeführten Wechsel ermittelt die Steuerung 25 erneut den Spannungszustand über den statischen Elementen und wenn kein Energiefluss mehr vorhanden ist, schaltet sie das Relais 23 und das Schütz 14 kann wieder betätigt und demzufolge der Motor und somit der Lift oder dergleichen in Betrieb gesetzt werden.

Die Überwachungseinrichtung mit der Steuerung 25 ist vorteilhaft unabhängig zur Steuerung des elektronischen Motorstarters 20 geschaltet. Dies ermöglicht eine optimale Sicherheit für einen mit diesem Verfahren nach der Erfindung gesteuerten Aufzug.

Gemäss Fig.2 weist der Motorstarter 20 als statische Elemente eingesetzte Halbleiter 29 (Thyristoren) sowie diesen vor- und nachgeschaltete Spannungsfühler 22, 24 auf. Diese Halbleiter 29 sind je an einer Phase angeschlossen und sie liegen dabei vorteilhaft in den Dreieck-Zweigen der Motorwicklungen. Damit wird eine Reduzierung der Strombelastung der Halbleiter erzielt. Für den Zünd-, resp. Ansteuerungsbereich der Halbleiter 29 werden herkömmliche Mittel verwendet, wie zum Beispiel Impulstransformatoren oder Opto-Kuppler.

Im Übrigen sind die Anschlussklemmen der Halbleiter 29, die Anschlussklemmen der Motorwicklungen sowie diejenigen der Phasen vorzugsweise an dem Motorstarter 20 selbst vorhanden. Ferner sind auch Anschlüsse 27 an dem Motorstarter enthalten, welche mit der Steuerung 25 verbunden sind. Diese Steuerung 25 ist vorteilhaft in einem zentralen, den gesamten Lift steuernden Rechner integriert und daher über Leitungsstränge mit den Anschlüssen 27 gekoppelt. Der vorzugsweise ein Gerät oder ein Modul bildende Motorstarter 20 ist indessen zweckmässigerweise beim Motor 15 plaziert. Ferner sind auch das oder die Schütze 14 vorzugsweise in diesem Motorstarter-Gerät integriert.

Ein solcher Fühler 22, 24 kann auf einfache und kostengünstige Weise z.B. aus drei Widerständen und einem Transistor pro Phase zusammengesetzt sein, wobei in Fig.2 in vereinfachter Darstellung nur ein Widerstand angedeutet ist. Diese Fühler 22, 24 sind vorzugsweise ebenfalls im Gerät mit dem Motorstarter 20 eingebaut und es sind hierbei ebenfalls entsprechende Anschlüsse 22' vorgesehen, welche über Leitungen 32, 34 mit der Steuerung verbindbar sind.

Durch diese Anordnung der Schütze 14, der Fühler 22, 24, der Halbleiter 29 und der entsprechenden Anschlüsse in dem als Motorstarter 20 vorgesehenen Gerät lässt sich eine sehr einfache Herstellung und Montage desselben erzielen.

Die Relais können alternativ zu der Ausführung gemäss Fig. 1 im Spannungsfühler 22, 24 integriert sein. Diese Relais werden von einer unabhängigen Elektronik, also nicht durch den Mikroprozessor des Stellglieds, resp. Motorstarters, angesteuert. Sie werden, wie oben bereits erwähnt, in entsprechender Weise in einen die Phasen unterbrechenden Schaltzustand gebracht, wenn mindestens eine Phase noch Spannung aufweist.

Beim Spannungsfühler 22 kann es sich auch um einen Hilfskontakt des Schützes 14 handeln, bei dem auf herkömmliche Art und Weise auf elektromechanischem Wege feststellbar ist, ob das Schütz funktioniert oder nicht.

Selbstverständlich könnten die Überwachungseinrichtung und der Motorstarter im Rahmen der in den Ansprüchen definierter Erfindung auch anders als dargestellt ausgestaltet sein. Die Erfin- dung ist jedoch mit dem erläuterten Ausführungsbeispiel genügend dargetan.

## Patentansprüche

1. Verfahren zur Überwachung eines Drehstrommotors, der insbesondere bei Aufzügen eingesetzt wird, bei dem mindestens ein Schütz (14) für das Ein- und Ausschalten des Motors (15) und ein elektronischer Motorstarter (20) mit mindestens einem statischen Schaltelement (29), wie einem Halbleiter oder dergleichen, für ein Sanftanlaufen des Motors verwendet wird, dadurch gekennzeichnet, dass
die anliegende Spannung beim Motor (15) bei Stillstand überwacht und die Freigabe eines Motorstartes verhindert wird, wenn bei diesem Motorstillstand eine unerwünschte Spannung auf mindestens einer der angeschlossenen Phasen (12) anliegt, wobei dem jeweiligen Schütz (14) ein Fühler (22) und dem jeweiligen Schaltelement (29) ein weiterer Fühler (24) zugeordnet ist, mittels denen ein Defekt beim jeweiligen Schütz (14) bzw. Schaltelement (29) festgestellt werden kann.

2. Verfahren nach Anspruch 1, dadurch gekennzeichnet, dass die anliegende Spannung beim Motor (15) zwischen dem Ein- (26) und Ausgang (28) des jeweiligen Schaltelementes (29) überwacht wird.

3. Verfahren nach Anspruch 2, dadurch gekennzeichnet, dass mit dem Fühler (22) am Eingang (26) ein Defekt des Schützes (14), indessen mit dem Fühler (24) am Ausgang (28) ein Defekt des Schaltelementes (29) festgestellt wird.

4. Überwachungseinrichtung zur Durchführung des Verfahrens nach Anspruch 1, 2 oder 3, mit mindestens einem Schütz (14) für das Ein- und Ausschalten eines Drehstrommotors (15) und einem elektronischen Motorstarter (20), mit mindestens einem statischen Schaltelement (29), wie einem Halbleiter oder dergleichen, für ein Sanftanlaufen des Motors, dadurch gekennzeichnet, dass
dem jeweiligen Schütz (14) ein Fühler (22) und dem jeweiligen Schaltelement (29) ein weiterer Fühler (24) zugeordnet ist, mittels denen das Vorhandensein einer unerwünschten Spannung an einer jeweiligen Phase (12) bei Motorstillstand feststellbar ist, wobei diese Fühler (22, 24) über Leitungen (32, 34) mit einer Steuerung (25) verbindbar sind, durch welche ein weiteres Schaltelement, vorzugsweise ein Relais (23), betätigbar ist, mittels welchem bei Vorliegen einer Spannung bei Motorstillstand ein Neustart des Motors (15) verhindert wird, wobei der Motorstarter (20) ein Gerät bildet, welches die als statische Elemente eingesetzten Halbleiter (29), insbesondere Thyristoren, die Fühler (22, 24) sowie die Schützen (14) zum Ein- und Ausschalten des Motors (15) aufweist.

5. Überwachungseinrichtung nach Anspruch 4, dadurch gekennzeichnet, dass die Steuerung (25) der Überwachungseinrichtung unabhängig zu der Steuerung des elektronischen Motorstarters vorgesehen ist.

6. Überwachungseinrichtung nach einem der Ansprüche 4 oder 5, dadurch gekennzeichnet, dass die Schaltelemente (29) jeweils in Reihe zu je einer Motorwicklung des Drehstrommotors geschaltet sind und die Motorwicklungen zueinander vorzugsweise in Dreieckschaltung angeordnet sind.

7. Überwachungseinrichtung nach einem der Ansprüche 4 bis 6, dadurch gekennzeichnet, dass die Fühler (22, 24) jeweils aus einem oder mehreren Widerständen und aus einem Transistor pro Phase ausgebildet sind.

8. Überwachungseinrichtung nach einem der vorhergehenden Ansprüche 4 bis 7, dadurch gekennzeichnet, dass der Motorstarter (20) ein Gerät bildet, an welchem die Anschlussklemmen der Halbleiter (29), die Anschlussklemmen der Motorwicklungen sowie diejenigen der Phasen selbst vorhanden sind.

9. Überwachungseinrichtung nach einem der Ansprüche 4 bis 8, dadurch gekennzeichnet, dass an dem als Gerät ausgebildeten Motorstarter (20) auch die Anschlüsse (22', 24', 27) für die Leitungsverbindung mit der Steuerung (25) vorhanden sind.

## Claims

1. A method of monitoring a rotary current motor used particularly in lifts where at least one contactor (14) is used for switching the motor (15) on and off and an electronic motor starter (20) with at least one static switching element (29) such as a semi-conductor or the like for smooth starting of the motor, characterised by the fact that the voltage applied at the motor (15) when it is at rest is monitored and a motor start release is prevented when undesirable voltage is applied at least at one of the connected conductors (12) while the motor is at rest, a sensor (22) being allocated to the respective contactor (14) and a further sensor (24) to the respective switching element (29), by means of which a fault can be detected at the respective contactor (14) or the switching element (29).

2. A method according to Claim 1, characterised by the fact that the voltage applied at the motor (15) is monitored between the input (26) and the output (28) of the respective switching element (29).

3. A method according to Claim 2, characterised by the fact that a contactor (14) fault is detected by means of the sensor (22) at the input (26) while a switch element (29) fault is detected by means of the sensor (24) at the output (28).

4. A monitoring device for implementing the method as in Claims 1, 2 or 3, with at least one contactor (14) for switching the motor (15) on and off and an electronic motor starter (20) with at least one static switching element (29) such as a semi-conductor or the like for smooth starting of the motor, characterised by the fact that a sensor (22) is allocated to the respective contactor (14) and a further sensor (24) to the respective switching element (29), by means of which the presence of an undesirable voltage at a respective conductor (12) can be detected while the motor is at rest, these sensors (22, 24) being connectable to a control unit (25) through which a further switching element, preferably a relay (23) can be operated by means of which re-starting of the motor (15) can be prevented when a voltage is present while the motor is at rest, the motor starter (20) forming a unit which has semi-conductors (29), particularly thyristors operating as static elements, the sensors (22, 24) and the contactors (14) for switching the motor (15) on and off.

5. A monitoring device as in Claim 4, characterised by the fact that the control unit (25) of the monitoring device is envisaged independently for controlling the electronic motor starter.

6. A monitoring device according to one of the Claims 4 or 5, characterised by the fact that each switching element (29) is connected in series with the winding of the rotary current motor and the motor windings are preferably connected in relation to each other in a delta arrangement.

7. A monitoring device according to one of the Claims 4 to 6, characterised by the fact that each of the sensors (22, 24) consists of one or more resistances and one transistor for each conductor.

8. A monitoring device according to one of the preceding Claims 4 to 7, characterised by the fact that the motor starter (20) forms a unit with the terminals for the semi-conductors (29), the terminals for the motor windings and for the conductors on it.

9. A monitoring device according to one of the Claims 4 to 8, characterised by the fact that the terminals (22', 24', 27) for connecting the cable to the control unit (25) are also fitted to the motor starter (20) which is designed as a unit.

## Revendications

1. Procédé de surveillance d'un moteur à courant alternatif triphasé qui est utilisé notamment dans des ascenseurs, dans lequel il est utilisé au moins un contacteur (14) pour la mise en circuit et hors circuit du moteur (15) et un démarreur (20) électronique de moteur ayant au moins un élément (29) statique de commutation, comme un semi-conducteur ou analogue, pour un démarrage en douceur du moteur, caractérisé en ce qu'il consiste
à surveiller la tension qui s'applique alors que le moteur (15) est à l'arrêt et à empêcher l'autorisation d'un démarrage du moteur si, alors que le moteur est à l'arrêt, il s'applique une tension qui n'est pas souhaitée à au moins l'une des phases (12) raccordées, une sonde (22) étant associée au contacteur (14) et une autre sonde (24) à l'élément (29) respectif de commutation, sondes au moyen desquelles on peut constater un défaut dans le contacteur (14) ou l'élément (29) de commutation respectif.

2. Procédé suivant la revendication 1, caractérisé en ce qu'il consiste à surveiller la tension qui s'applique au moteur (15) entre l'entrée (26) et la sortie (28) de l'élément (29) de commutation respectif.

3. Procédé suivant la revendication 2, caractérisé en ce qu'il consiste à constater avec la sonde (22) à l'entrée (26) un défaut du contacteur (14), tandis que la sonde (24) constate à la sortie (28) un défaut de l'élément (29) de commutation.

4. Dispositif de surveillance pour la mise en oeuvre du procédé suivant la revendication 1, 2 ou 3, comprenant au moins un contacteur (14) pour la mise en circuit et hors circuit d'un moteur (15) triphasé à courant alternatif et un démarreur (20) électronique de moteur ayant au moins un élément (29) statique de commutation, comme un semi-conducteur ou analogue, pour un démarrage en douceur du moteur, caractérisé en ce qu'à chaque contacteur (14) est associé une sonde (22) et à chaque élément (29) de commutation une autre sonde (24), sondes au moyen desquelles on peut constater la présence d'une tension qui n'est pas souhaitée sur l'une des phases (12) respectives, alors que le moteur est à l'arrêt, ces sondes (22, 24) pouvant être reliées par des conducteurs (32, 34) à une commande (25) par laquelle on peut actionner un autre élément de commutation, de préférence un relais (23), au moyen duquel, s'il s'applique une tension alors que le moteur est à l'arrêt, un redémarrage du moteur (15) est empêché, le démarreur (20) du moteur formant un appareil qui comporte les semi-conducteurs (29) utilisés comme éléments statiques, notamment des thyristors, les sondes (22, 24) ainsi que les contacteurs (24) pour mettre en circuit et hors circuit le moteur (15).

5. Dispositif de surveillance suivant la revendication 4, caractérisé en ce que la commande (25) du dispositif de surveillance est prévue indépendamment de la commande du démarreur électronique du moteur.

6. Dispositif de surveillance suivant l'une des revendications 4 ou 5, caractérisé en ce que les éléments (29) de commutation sont montés respectivement en série avec un enroulement du moteur alternatif à courant triphasé et les enroulements du moteur sont montés les uns par rapport aux autres, de préférence suivant un circuit en triangle.

7. Dispositif de surveillance suivant l'une des revendications 4 à 6, caractérisé en ce que les sondes (22, 24) sont constituées respectivement d'une résistance ou de plusieurs résistances et d'un transistor par phase.

8. Dispositif de surveillance suivant l'une des revendications 4 à 7 précédentes, caractérisé en ce que le démarreur (20) du moteur forme un appareil sur lequel sont présents les bornes de raccordement des semi-conducteurs (29), les bornes de raccordement des enroulements du moteur ainsi que celles des phases elles-mêmes.

9. Dispositif de surveillance suivant l'une des revendications 4 à 8, caractérisé en ce qu'il est prévu sur le démarreur (20) du moteur, constitué en appareil, également les bornes (22', 24', 27) pour la liaison avec la commande (25).
